# EUROPÄISCHE PATENTSCHRIFT

(11) **EP 1 186 865 B1**
(45) Veröffentlichungstag und Bekanntmachung des Hinweises auf die Patenterteilung: **18.10.2006**
(21) Anmeldenummer: 01118084.1
(22) Anmeldetag: 26.07.2001
(51) Int. Cl.: G01C 21/36, G08G 1/0968

(54) **Verfahren zur Bestimmung einer Fahrtroute eines Fahrzeugs**
Method for determining the trajectory of a vehicle
Procédé de détermination de la trajectoire d'un véhicule

(30) Priorität: 12.09.2000 DE 10044889
(43) Veröffentlichungstag der Anmeldung: 13.03.2002
(73) Patentinhaber: Harman Becker Automotive Systems GmbH, 76307 Karlsbad (DE); PTV Planung Transport Verkehr AG, 76131 Karlsruhe (DE)
(72) Erfinder: Hubschneider, Hans, 76131 Karlsruhe (DE); Ruf, Michael, 76316 Malsch (DE)
(74) Vertreter: Patentanwälte Westphal, Mussgnug & Partner

(56) Entgegenhaltungen:
- EP-A- 0 845 658
- DE-A- 19 640 735

## Beschreibung

Die Erfindung betrifft ein Verfahren zur Bestimmung einer Fahrtroute eines Fahrzeugs zwischen einem momentanen Ort und einem Zielort.

Die bekannten Verfahren, von denen die Erfindung ausgeht, sind aus dem Stand der Technik in einer Vielzahl von Abwandlungen bekannt. So ist beispielsweise in der DE 19750 775 A1 ein derartiges Verfahren beschrieben. Es basiert darauf, dass Verkehrsinformationen zu einem Verkehrsnetz in einer Zentrale abgelegt sind und von einem Fahrzeug zur Bestimmung einer optimalen Fahrtroute nach bestimmten Kriterien abgerufen werden.

Das Hauptproblem dieses Verfahrens liegt darin, dass die der Zentrale vorliegenden Verkehrsinformationen nicht in hinreichender Menge und in ausreichender Güte vorliegen.

Die Gewinnung von Verkehrsinformationen durch fahrende Fahrzeuge, besser bekannt unter der englischsprachigen Bezeichnung Floating Car Data (FCD), wird als die aussichtsreichste Methode für die Zukunft angesehen. Das prinzipielle Konzept sieht vor, dass Fahrzeuge selbst erst Zustände erkennen und diese an eine Zentrale melden. Die Zentrale verarbeitet und kombiniert diese Meldungen und stellt das Ergebnis als Verkehrslage wieder zur Verfügung. Die letzten Jahre haben gezeigt, dass aus den unterschiedlichsten Gründen diese FCD-Methode noch nicht den gewünschten Erfolgt gezeigt hat. Folgende Probleme wurden u. a. in den Fachkreisen erkannt und werden diskutiert:

Zum einen basieren die bisherigen Ansätze zur Floating Car Data auf dem Telematikprotokoll GATS. Hierfür standen bisher zu wenige Endgeräte zur Verfügung. Ausserdem war der FCD-Bereich des GATS-Protokolls nicht allgemein zugänglich.

Ferner führten die bisher benutzten FCD-Verfahren zu extrem hohen Kommunikationskosten, da sie kaum Rückkopplung des Verkehrszustands an die FCD-Fahrzeuge ermöglichen.

Des weiteren entsteht die Wirksamkeit des Floating Car Data-Verfahrens erst bei hoher Durchdringung der Fahrzeugpopulation, welche mit den entsprechenden elektronischen Einrichtungen versorgt sind. Der Aufbau einer flächendeckenden Versorgung ist derzeit noch nicht in Sicht.

Die Hochrechnung der Kommunikationskosten zur Generierung von FCD-Daten gab so hohe Summen, dass die Gegenfinanzierung durch Telematikdienste fraglich war. Dies umso mehr, als Telematikdienste derzeit generell nicht in dem Umfang genutzt werden, wie dies erwartet wurde, so dass diese keine relevanten Erträge erwirtschaften konnten, welche eine Gegenfinanzierung erlaubt hätte.

Ferner steht die FCD-Methode unter dem Vorbehalt des Datenschutzes. Bei einer standardmässigen Einführung muss mit kritischen Stimmen durch Verbraucherschützer und Zurückhaltung der Nutzer gerechnet werden. Insbesondere wenn für den Verkehrsteilnehmer kein direkter Nutzen für die Lieferung der Verkehrslagedaten sichtbar wird, wird eine permanente Übermittlung aktueller Positionsdaten nicht durchsetzbar sein.

Der Erfindung liegt somit die Aufgabe zugrunde, die bekannten Verfahren derart auszugestalten, dass eine einfache und kostengünstige Erfassung von aktuellen Verkehrszuständen unter gleichzeitiger einfacher und kostengünstiger Verbesserung/Dynamisierung der Navigation und Zielführung unter Berücksichtigung aktueller Daten möglich wird.

Diese Aufgabe wird durch ein Verfahren zur Bestimmung einer Fahrtroute eines Fahrzeugs mit den Merkmalen des Anspruchs 1 erfindungsgemäss gelöst.

Vorteilhafte Ausführungen und Weiterbildungen der Erfindung sind in den Unteransprüchen angegeben.

Das erfindungsgemässe Verfahren basiert darauf, dass im Fahrzeug zunächst der momentane Ort und der Zielort festgelegt werden, d. h. beispielsweise, dass von einem Navigationssystem eine Route zu einem Ziel geplant wird und die dazu berechnete Start-Zielbeziehung an einen zentralen Verkehrsinformationsdatenspeicher übertragen wird. Danach werden Verkehrsinformationsdaten zu einem Verkehrsnetz von dem zentralen Verkehrsinformationsdatenspeicher beispielsweise an das Navigationssystem geliefert. Die gelieferten Verkehrsinformationsdaten werden zur Bestimmung der Fahrtroute in dem Verkehrsnetz zwischen dem momentanen Ort und dem Zielort verwendet. Die Daten der bestimmten Fahrtroute werden dem Fahrzeugführer zur Verfügung gestellt, so dass dieser in der Lage ist, das angestrebte Ziel auf der bestimmten Fahrtroute anzusteuern. Dabei ist es ebenfalls erforderlich, dass er über seine aktuelle Position informiert gehalten wird.

Der wesentliche Gedanke der Erfindung besteht nun darin, dass Daten zur aktuellen Fahrtroute (d. h. die Start-Zielbeziehung) zu dem zentralen Verkehrsinformationsdatenspeicher übertragen werden und somit zu dieser Route Verkehrsinformationen/Streckenzeiten/u.U. Historiendaten angefragt werden. Als Antwort der übertragenen Daten werden Verkehrsinformationsdaten zur aktuellen Fahrtroute geliefert. Diese gelieferten Verkehrsinformationsdaten werden dann wiederum wie bereits oben angegeben zur Bestimmung der Fahrtroute in dem Verkehrsnetz zwischen dem momentanen Ort und dem Zielort im Fahrzeug verwendet. Die Anforderung von Verkehrsinformationsdaten aus dem zentralen Verkehrsinformationsdatenspeicher ist also damit verknüpft, dass sie Verkehrsinformationsdaten betreffen, die aktuell von dem Fahrzeug durchfahrenen Route dem zentralen Verkehrsinformationsdatenspeicher zur Verfügung gestellt werden, welche dieser ggf. vorselektiert in seinen Datenbestand aufnimmt. Es ist folglich sichergestellt, dass sowohl der zentrale Verkehrsinformationsdatenspeicher stets mit aktuellsten Informationen versorgt ist und gleichzeitig der Fahrzeugführer die aktuellsten Informationen über den vor ihm liegenden Streckenabschnitt erhält. Diese Informationen können zum einen dazu verwendet werden, eine neue erwartete Ankunftszeit (estimated time of arrival = ETA) zu berechnen oder bei wesentlichen Verkehrs-Beeinträchtigungen auf der geplanten Route eine Alternativroute zu bestimmen.

Eine erste Variante der Erfindung sieht vor, dass zusätzlich zu den Daten zur aktuellen Fahrtroute auch Daten zu bisherigen Fahrtverläufen zu dem zentralen Verkehrsinformationsdatenspeicher übertragen werden. Diese Daten ermöglichen den sukzessiven Aufbau der Informationsdatenbank mit Historiendaten zum Verkehrsablauf. Die Historiendaten können beispielsweise Start- und Zielorte, Fahrzeitverläufe zu bisher gefahrenen Routen, Informationen über den Straßenzustand ect. aufweisen. Die bisherigen Fahrtverläufe umfassen im einfachsten Fall den bisherigen Verlauf der aktuellen Fahrt, es können jedoch auch Informationen zu früheren Fahrten zur Verfügung gestellt werden. Mit diesen Informationen ist der zentrale Verkehrsinformationsdatenspeicher in der Lage statistische Auswertungen vorzunehmen, wie z. B. die Verkehrsdichte zu bestimmten Uhrzeiten oder an bestimmten Wochentagen oder Verkehrsbeziehungen zwischen bestimmten Orten. Diese Informationen stehen dann selbstverständlich für zukünftige Abfragen dem Nutzer zur Verfügung.

Eine zweite Variante der Erfindung sieht vor, dass zusätzlich zu den Daten zur aktuellen Fahrtroute und zusätzlich oder alternativ zu den Daten zu bisherigen Fahrtverläufen auch Zusatzinformationsdaten zu dem zentralen Verkehrsinformationsdatenspeicher übertragen werden. Solche Zusatzinformationsdaten können auch vom Fahrer direkt eingegebene Hinweise sein. Hierfür sind insbesondere einfache Zustände wie "Einfahrt in Stau", "Verlassen Stau", "Stau auf Gegenspur" geeignet. Ferner können Meldungen wie Blitzgeräte oder Geschwindigkeitskontrollen übermittelt werden. Insbesondere ist ein solches Verfahren auch alternativ zum üblichen "Staumelder" über Sprachtelefonie denkbar bei erheblich niedrigeren Kosten und einfacherer Bedienung.

In einer dritten Variante der Erfindung ist vorgesehen, dass die Daten zur aktuellen Fahrtroute und die Daten zur bestimmten Fahrtroute verglichen werden und bei Abweichung dem Fahrer angezeigt werden. Hierzu gehört neben einer Abweichung von der Fahrtroute selbst auch eine Abweichung von der erwarteten Ankunftszeit oder dergleichen. Auf diese Weise ist der Fahrer stets in der Lage, diese Abweichung zu korrigieren oder beispielsweise eine am Zielort wartende Person zu informieren.

In einer vierten Variante der Erfindung ist vorgesehen, dass die Übertragung der Daten zu dem Verkehrsinformationsdatenspeicher manuell ausgelöst erfolgt. Die übertragenen Daten sind, wie oben bereits ausführlich beschrieben, Daten zur aktuellen Fahrtroute, Daten zu bisherigen Fahrtverläufen oder auch Zusatzinformationsdaten. Eine manuell ausgelöste Übertragung von Daten und die damit verbundenen Anforderungen von Verkehrsinformationsdaten vom zentralen Verkehrsinformationsdatenspeicher ist insbesondere dann vorteilhaft, wenn der Fahrer über eine Abweichung von der aktuellen Fahrtroute informiert worden ist. Sinnvoll ist dies auch, wenn im Verlauf der Fahrt ein ungewöhnlicher Verkehrszustand erkannt wird, wie z. B. eine Einfahrt in einen Stau oder eine Ausfahrt aus einem Stau. Diese Anforderung muss selbstverständlich nicht zwingend in einer Alternativroutenbestimmung resultieren. Sie kann auch darin bestehen, dass lediglich eine neue erwartete Ankunftszeit berechnet wird.

Zusätzlich oder alternativ zur vierten Variante sieht eine fünfte Variante vor, dass die Übertragung der Daten zu dem Verkehrsinformationsdatenspeicher automatisch ausgelöst erfolgt. Die automatische Übertragung von Daten zur Zentrale hat zum einen den Vorteil, dass der Fahrer nicht ständig selbst aktiv über jedes Detail der aktuellen Fahrtroute informiert sein muss, bzw. überwachen muss und dass auch Änderungen, welche sich im Verlauf der Fahrt ergeben, welche aber lediglich einen weiter entfernt auf der zu durchquerenden Strecke liegenden ungewöhnlichen Verkehrszustand betreffen, frühzeitig erkannt und entsprechende Gegenmaßnahmen eingeleitet werden können. Selbstverständlich kann dieser Zustand einerseits dem Fahrzeugführer mitgeteilt werden und andererseits auch selbständig eine Neubestimmung bzw. Neuberechnung der Fahrtroute auslösen.

Es kann sinnvoll sein, insbesondere bei Fahrten in staugefährdete Gebiete oder für längere Fahrten automatisch weitere Anfragen dem zentralen Verkehrsinformationsdatenspeicher zu stellen. Die Erfindung sieht dabei in einer sechsten Variante vor, dass eine Übertragung der Daten automatisiert zyklisch folgt und somit Verkehrsinformationsdaten zyklisch von dem zentralen Verkehrsinformationsdatenspeicher geliefert werden. Unter zyklischer Datenübertragung ist einerseits zu verstehen, dass in regelmäßigen Zeitabständen eine Datenübertragung erfolgt und damit eine Übertragung von Verkehrsinformationsdaten ausgelöst wird, zum anderen ist auch vorgesehen, beispielsweise nach einer gewissen zurückgelegten Wegstrecke, einen derartigen Übertragungsvorgang auszulösen. Zudem besteht durch den geschlossenen Regelkreis (zentraler Verkehrsinformationsdatenspeicher - Routenbestimmung - Bestimmung von Daten zur aktuellen Fahrtroute, insbesondere Positionsdaten und Verkehrszustandsdatenermittlung - Verkehrsinformationsdatenspeicher) die Möglichkeit, dass von einer zentralseitigen Steuerungseinheit bzw. im Fahrzeug selbst Kriterien ermittelt werden, nach denen eine erneute Datenübergabe von Zustandsinformationen ausgelöst wird. Diese Kriterien können beispielsweise auch auf Basis von Historiendaten ermittelt werden. Es besteht technisch auch die Möglichkeit, durch Übergabe einer Behinderungswahrscheinlichkeit die Häufigkeit von zyklischen Abfragen zu steuern. Damit kann eine vergleichbare Dienstequalität wie bei einer aktiven Begleitung durch den zentralen Verkehrsinformationsdatenspeicher erreicht werden. Die zyklische Wiederholungsfunktion sollte vorzugsweise bei der ersten Datenübertragung zum Verkehrsinformationsdatenspeicher ausgewählt oder zumindest grundsätzlich konfigurierbar sein.

Die Erfindung sieht in einer siebten Variante vor, dass die Übertragung der Daten an fest vorgegebenen Ortspunkten erfolgt. Solche Ortspunkte können beispielsweise Entscheidungspunkte sein, welche dem Fahrzeugführer beispielsweise verschiedene Alternativrouten gewähren. Weiterhin können solche Ortspunkte an Streckenpunkten sein, an denen häufig Staus oder andere beispielsweise durch Witterungseinflüsse wie Nebel, Nässe oder Schnee gefährdete Streckenabschnitte sein. Diese Punkte können analog zu zyklischen Datenübertragung beispielsweise auf Basis von Historiendaten ermittelt werden. Auch hier ist möglich, durch Übergabe einer Behinderungswahrscheinlichkeit die Zahl der auf einem Streckenabschnitt liegenden Ortspunkten, an denen eine Datenübertragung stattfinden soll, zu steuern.

Es ist dabei vorgesehen, dass eine beliebige Konfigurationsmöglichkeit gegeben ist, ob die Übertragung von Daten zyklisch oder an fest vorgegebenen Ortspunkten erfolgt. Wichtig ist in diesem Zusammenhang festzustellen, dass alternativ zu der automatischen Wiederholung jederzeit vom Fahrer eine manuelle Datenübertragung ausgelöst werden kann. Dies kann beispielsweise durch einen einfachen Tastendruck ermöglicht werden. Diese Möglichkeit der manuellen Auslösung der Datenübertragung ist insbesondere dann sinnvoll, wenn beispielsweise ein Hinweis einer neu eingetroffenen relevanten Staumeldung, beispielsweise über RDS oder TMC dem Fahrer mitgeteilt wird, so dass dieser in der Lage ist, diese zu verifizieren. Der Fahrer erhält somit stets die Möglichkeit, auch auf seine aktuelle Fahrtroute Einfluss zu nehmen, wenn eine Behinderung erst auf einem sehr entfernt liegenden Streckenabschnitt zu erwarten ist.

In einer weiteren Ausführungsvariante der Erfindung ist vorgesehen, dass die Daten zur aktuellen Fahrtroute und die Daten zur bestimmten Fahrtroute verglichen werden und dass die Übertragung der Daten aufgrund einer Abweichung der aktuellen Fahrtroute von der bestimmten Fahrtroute erfolgt. Diese Variante stellt sicher, dass der Fahrer auch dann zum Ziel geführt wird, wenn er selbstständig aufgrund einer eigenen Entscheidung oder irrtümlich von der anfangs geplanten Route weicht. Dabei ist vorgesehen, dass die Kriterien für die Auslösung der Datenübertragung frei konfigurierbar sind. Ferner ist vorgesehen, dass der Fahrer selbst konfigurieren kann, ob und welche automatische Datenübertragung zugelassen ist oder ob er selbst manuell die Datenübertragung auslösen will aufgrund der ihm zur Verfügung stehenden Daten über die aktuelle Fahrtroute und die bestimmte Fahrtroute.

In einer neunten Variante der Erfindung ist vorgesehen, dass die Bestimmung der Fahrtroute im Fahrzeug erfolgt. Diese Variante hat den Vorteil, dass ein im Fahrzeug vorhandenes Navigationssystem genutzt werden kann. Es ist also möglich, dass dieses Navigationssystem zunächst eine Route berechnet und dass diese von dem Navigationssystem berechnete Route zu den zentralen Verkehrsinformationsdatenspeicher übertragen wird. Die Beschreibung der Route erfolgt auf einer geeigneten festgelegten Detaillierungsstufe. Als derartige Detaillierungsstufen kommen sogenannte Link-IDs, Knotenkoordinaten oder Routenzwischenpunkte in Frage. Diese Routenzwischenpunkte können z. B. vom Systembetreiber selbst definiert werden oder auf bekannte Standards wie Alert-C zurückgreifen. Der zentrale Verkehrsinformationsdatenspeicher ermittelt die Fahrzeiten, Geschwindigkeit sowie besondere Zustände Staus, Grenzwartezeiten ect. auf der beschriebenen Route. Die Informationen werden entsprechend der jeweiligen Detaillierungsstufe aufbereitet und zum Fahrzeug übertragen. Die Fahrzeiten und Geschwindigkeiten werden der gewählten Route überlagert und für die Berechnung der aktualisierten estimated time of arrival genutzt.

Eine zehnte Variante der Erfindung sieht vor, dass die Bestimmung der Fahrtroute am Ort des zentralen Verkehrsinformationsspeichers erfolgt. Diese Variante hat den Vorteil, dass es nicht zwingend notwendig ist, dass ein im Fahrzeug vorhandenes Navigationssystem lokal digitale Karten aufweisen müsste. Diese Karten könnten im zentralen Verkehrsinformationsdatenspeicher vorhanden sein, welcher lediglich die für die Zielführung notwendigen Karten zur Verfügung stellt. Alternativ ist auch möglich, dass eine Abbildung von dem im Fahrzeug benutzten Navigationssystem vorhandenen digitalen Karte der Zentrale übermittelt wird, welche dieses Kartenmaterial für die Zielführung benutzt und die berechnete Route zurücküberträgt.

In einer weiteren Variante der Erfindung ist vorgesehen, dass die Übertragung der Daten über Protokolle wie z. B. WAP, HTTP, TCP/IP und Übertragungssysteme wie GSM, GPRS oder UMTS erfolgt. Diese Technologien oder derartige Technologien haben den Vorteil, dass auf einfache Weise eine Kommunikationsverbindung herstellbar ist. Weiterhin ist von Vorteil, dass Kommunikations- und Transaktionskosten sehr einfach abrechenbar sind, da Kosten nur dann anfallen, wenn wirklich Informationen angefordert werden, beispielsweise wenn eine automatische Datenübertragung erfolgt oder wenn der Fahrer selbst aktiv einen Informationsaustausch anfordert. Da die Datenübertragung fahrzeuginitiiert stattfindet, ist es auch einfach möglich, aufgrund der übertragenen Informationen Abrechnungsmodi zu finden, welche die Art der Informationen berücksichtigen. So ist beispielsweise möglich, dass bei einer durch den Fahrer ausgelösten aktiven Übertragung von Verkehrszuständen (Staumelder) eine Rückvergütung stattfindet, wenn der Fahrer selbst keine zusätzliche seine Fahrtroute betreffende Informationen erhält. Ferner ist vorteilhaft, dass ausgeschlossen werden kann, dass von dem zentralen Verkehrsinformationsdatenspeicher selbst ein Downlink auslösbar ist. Dadurch wird sichergestellt, dass die Anonymität des Fahrzeugs und damit des Fahrzeugführers beibehalten bleiben kann. Vorbehalte hinsichlich des Datenschutzes sind damit weitgehend ausgeräumt.

In einer weiteren Variante der Erfindung ist vorgesehen, dass höherwertige Telematikdienste mit einbezogen werden. So können z. B. bei Vorhandensein von Störungen auf der gewählten Route (falls sich Stau in einer geringen Reichweite, z. B. unter eiiner Stunde Entfernung befindet) zusätzlich Fahrtzeit/Geschwindigkeit für die um die Störung liegenden Hauptverkehrsstraßen an das Fahrzeug übertragen werden, um eine sinnvolle Alternativroutenberechnung in einem Schritt zu ermöglichen. Diese Variante bietet sich insbesondere dann an, wenn direkt eine optimale (alternative) Fahrtroute vollständig in der Zentraleinheit berechnet wird, die dem Fahrer direkt angeboten werden kann. Hierzu ist die Adressierbarkeit des Fahrzeuges notwendig. Notwendig ist hierzu, wie oben bereits geschildert, die Möglichkeit einer Abbildung der in der Zentraleinheit und im Fahrzeuggerät benutzten digitalen Karten.

Die Erfindung sieht weiterhin vor, ein System zur Durchführung des oben beschriebenen Verfahrens zur Verfügung zu stellen. Es basiert auf einer Zentraleinheit, umfassend einen zentralen Verkehrsinformationsdatenspeicher, einer Steuereinheit und einer Kommunikationseinrichtung zum Empfangen und Senden von Daten von und zu einer Fahrzeugeinheit. Die Fahrzeugeinheit umfasst selbst eine Kommunikationseinrichtung zum Empfangen und Senden von Daten von und zu der Zentraleinheit. Weiterhin umfasst die Fahrzeugeinheit zum Erfassen von Verkehrszuständen, eine Navigationseinheit und einen Übertragungsmanager, welcher das Empfangen und Senden der Daten von und zu der Zentraleinheit steuert. Der Austausch der Information ist z. B. angelehnt an Standards nach Alert-C. Die Routenzwischenpunkte basieren z. B. auf bekannten Locations bzw. auf selbst definierten Tabellen.

Ein Ausführungsbeispiel der Erfindung ist in der Zeichnung dargestellt und wird im Folgenden näher beschrieben.

Es zeigen:
- Figur 1: ein Blockschaltbild eines Fahrtroutenbestimmungssystems zur Durchführung des erfindungsgemäßen Verfahrens zur Bestimmung einer Fahrtroute zwischen einem momentanen Ort und einem Zielort,
- Figur 2: eine Darstellung des Datenkurses in dem erfindungsgemäßen Fahrroutenbestimmungssystem nach Figur 1,
- Figur 3: ein Flussdiagramm zur Demonstration des erfindungsgemäße Verfahrens.

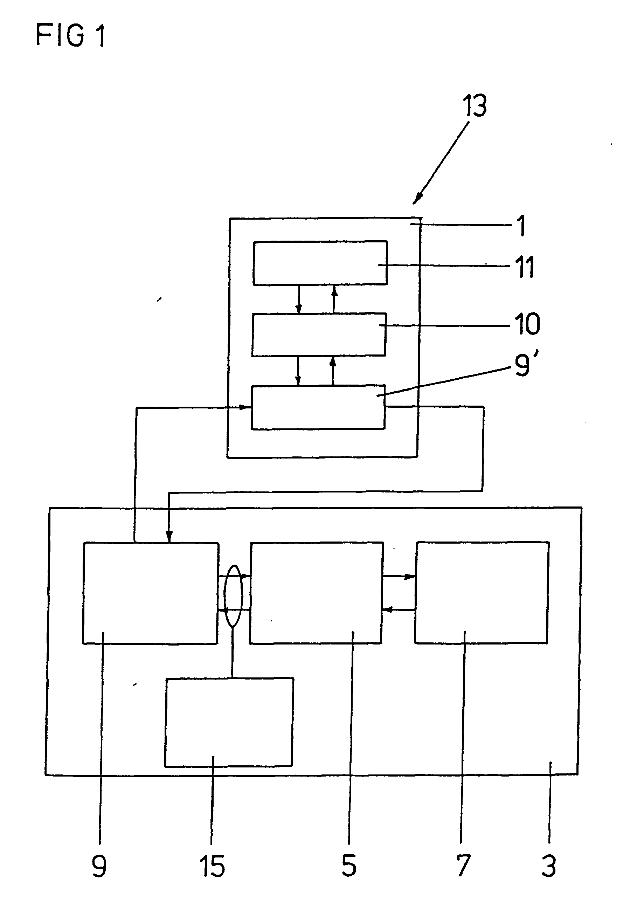

Die Figur 1 zeigt in Blockschaltbilddarstellung die Komponenten eines erfindungsgemäßen Fahrtroutenbestimmungssystems 13. Das System basiert auf einer vorzugsweise örtlich feststehenden Zentraleinheit 1 und einer in einem Fahrzeug angeordneten Fahrzeugeinheit 3.

Die Zentraleinheit weist einen Verkehrsinformationsdatenspeicher 11, eine Steuerungseinheit 10, die u. U. für die Selektion der für angefragte Routen relevanten Verkehrsinfos, die Wahl der Referenzpunkte zur neuerlichen automatischen Anfrage und die Interpretation und Bewertung der eingegangenen Informationen zuständig ist, auf und eine Kommunikationseinheit 9' zum Senden und Empfangen von Daten. Der Verkehrsinformationsdatenspeicher 11 ist mit der Steuerungseinheit 10 sowie die Steuerungseinheit 10 ist mit der Kommunikationseinheit 9' über eine bidirektionale Verbindung verbunden.

Die Fahrzeugeinheit 3 basiert auf einer Kommunikationseinheit 9 zum Senden und Empfangen von Daten, einem FCD-Modul 5 und einer Navigationseinheit 7. Zusätzlich ist in der Fahrzeugeinheit 3 ein Übertragungsmanager 15 vorgesehen. Die Kommunikationseinheit 9 ist im Beispiel über eine bidirektionale Verbindung mit dem Übertragungsmanager 15 verbunden, der wiederum bidirektional mit dem FCD-Modul 5 und der Navigationseinheit 7 kommuniziert. Weiterhin wird der Datenfluss von der Navigationseinheit 7 zum FCD-Modul 5 geführt. Der Übertragungsmanager 15 ist für die Bündelung und die Verteilung der Daten innerhalb der Fahrzeugeinheit 3 verantwortlich. Weiterhin regelt er das Kommunikationsvolumen zwischen der Fahrzeugeinheit 3 und der Zentraleinheit 1.

Die Kommunikationseinheit 9 der Fahrzeugeinheit 3 sowie die Kommunikationseinheit 9' der Zentraleinheit 1 sind über eine Mobilfunkstrecke bidirektional miteinander in Kontakt. Selbstverständlich können die Kommunikationseinheit 9' und der Verkehrsinformationsdatenspeicher 11 der Zentraleinheit 1 sowie die Steuerungseinheit 10 der Zentraleinheit 1 lokal weit auseinander liegen.

Als in der Kommunikationseinheit verwendetes Protokoll kann beispielsweise WAP, HTTP, TCP/IR oder ein vergleichbares Protokoll verwendet werden. Als Übertragungsverfahren kann z. B. GSM, GPRS oder UMTS verwendet werden. Im FCD-Modul 5 ist ein beliebiges Erkennungsverfahren implementiert.

Die Navigationseinheit 7 umfasst beispielsweise einen Navigationsrechner, diverse digitale Karten, welche in nahezu beliebiger Form abgelegt sein können, ein Ortsbestimmungssystem wie beispielsweise GPS, diverse Sensoren usw.

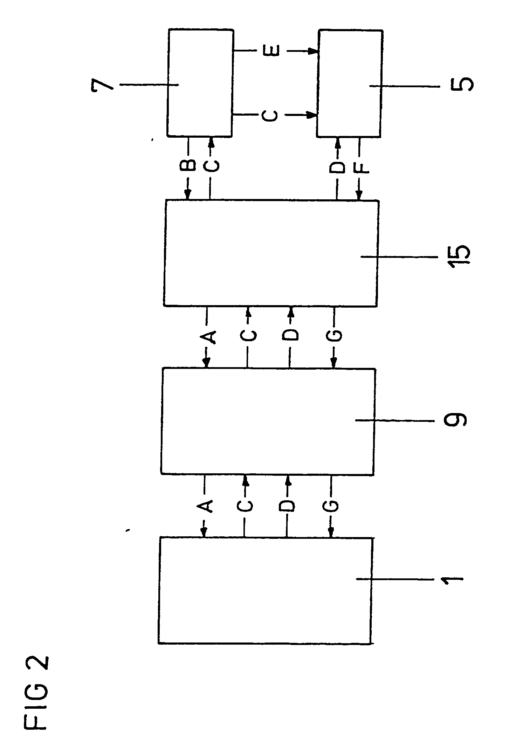

Die Figur 2 zeigt beispielhaft, welche informationentragenden Daten zwischen den einzelnen Komponenten des Fahrtroutenbestimmungssystems übertragen werden. Auf eine Darstellung der Übertragung von Anforderungsdaten oder dergleichen wurde der Übersichtlichkeit halber verzichtet. Des weiteren wurden die lediglich Sende- und Empfangsfunktionen ausübenden Kommunikationseinheiten 9 und 9' der verbesserten Übersichtlichkeit halber weggelassen.

Demzufolge zeigt die Figur 2 die über entsprechende Datenstrecken oder Datenleitungen verknüpften Komponenten. Dies sind im Einzelnen: den Verkehrsinformationsdatenspeicher 11 in der Zentraleinheit 1 sowie die Navigationseinheit 7, das FCD-Modul 5 und den Übertragungsmanager 15 in der Fahrzeugeinheit 3.

Beim Start des RTI Prozesses sendet der Übertragungsmanager 15 über die Kommunikationseinheit 9 Routeninformationen A an die Zentraleinheit 1 und fragt aktuelle Soll-Reisezeiten von der Zentraleinheit 1 an. Die hierzu erforderliche Liste B aller routenrelevanten Informationen wird zuvor von der fahrzeugseitigen Navigationseinheit 7 an den Übertragungsmanager 15 übergeben. Die Zentraleinheit 1 sendet an die Kommunikationseinheit 9 des fahrzeugseitigen Systems die Soll-Reisezeiten C und Konfigurationsdateien D, die an den Übertragungsmanager 15 übergeben werden. Die Soll-Reisezeiten C werden von dem Übertragungsmanager 15 an die Navigationseinheit 7 weitergeleitet, die daraufhin eine aktualisierte Route berechnet. Die Konfigurationsdateien D übergibt der Übertragungsmanager 15 an das FCD-Modul 5. Nach der Aktualisierung der Route werden von der Navigationseinheit 7 sowohl die Soll-Reisezeiten C als auch aktuelle Fahrt- und Ortungsinformationen E an das FCD-Modul 5 übergeben. Das FCD-Modul 5 sendet wiederum FCD-Informationen F an den Übertragungsmanager 15, der die aktuell detektierte Verkehrslage und Historienwerte in einer Nachricht G über die Kommunikationseinheit 9 an die Zentraleinheit 1 sendet.

Der Kommunikationsaufwand, der mit dem Versenden der Nachrichten G verbunden ist, wird durch den Übertragungsmanager 15 begrenzt. Hierbei darf pro Anfrage A oder innerhalb einer Zeiteinheit das Verhältnis der Anfragen A zu den Nachrichten G nicht unterschritten werden. Das Verhältnis kann über die Konfigurationsdateien D von der Zentraleinheit 1 bestimmt und geändert werden.

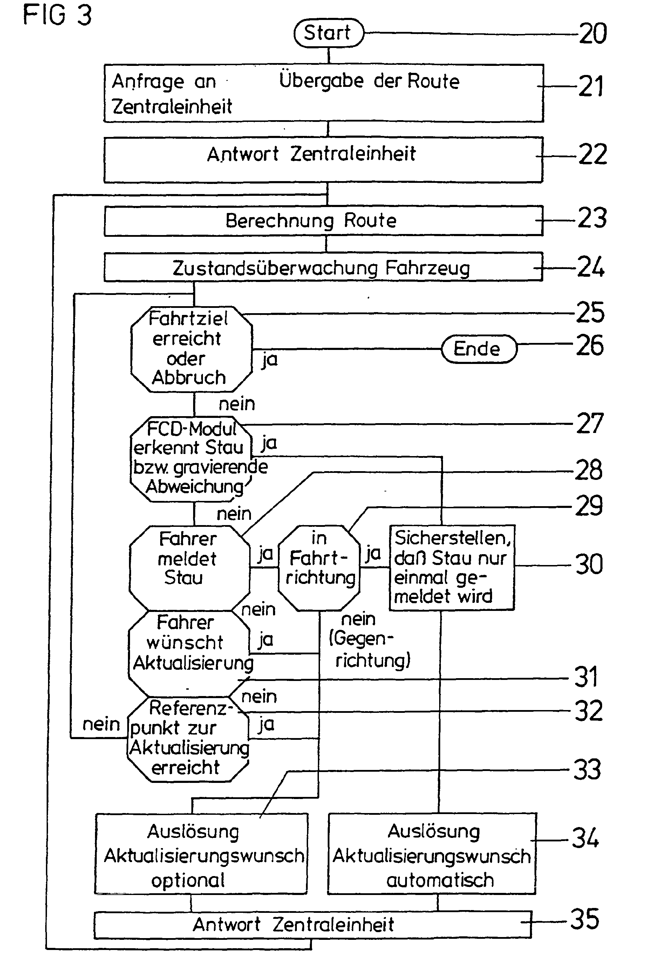

Die Figur 3 demonstriert beispielhaft, wie eine Routenplanung gemäß dem erfindungsgemäßen Verfahren abläuft. Zunächst wird der momentane Ort und der Zielort bestimmt. Der momentane Ort kann beispielsweise von der in der Navigationseinheit 7 vorgesehenen GPS-System durchgeführt werden. Der Zielort wird in der Regel vom Fahrer selbst vorgegeben. Von der Navigationseinheit 7 wird nun beispielsweise eine Fahrtroute zu dem Zielort geplant. Jetzt wird das in der Figur 3 dargestellte Verfahren in Gang gesetzt. Der Start des Verfahrens ist in der Figur 3 mit dem Bezugszeichen 20 gekennzeichnet. Es erfolgt eine Anfrage bei der Zentraleinheit 1, bei der die Übergabe der von der Navigationseinheit 7 berechneten Route stattfindet. Dieser Schritt ist der Figur 3 mit dem Bezugszeichen 21 gekennzeichnet.

Die Übergabe der Route kann beispielsweise in Form einer Liste von Routenzwischenpunkten erfolgen. Dies bedeutet, dass Strekkenabschnitte durch jeweils zwei Routenzwischenpunkte an die Zentraleinheit 1 übermittelt werden. Der Verkehrsinformationsdatenspeicher 11 der Zentraleinheit 1 besitzt Kenntnis über aktuelle und historische Verkehrslagedaten auf allen Streckenabschnitten zwischen zwei Routenzwischenpunkten. Die in dem Verkehrsinformationsdatenspeicher 11 vorhandenen Daten können einerseits aufgrund der Benutzer des erfindungsgemäßen Verfahrens vorhanden sein; es ist jedoch auch möglich, dass Daten abgelegt sind, welche von anderen Providern, welche Verkehrsdaten bereitstellen, geliefert werden.

Ferner ist in Kenntnis der von der Fahrzeugeinheit 3 zur Verfügung gestellten geplanten Fahrtroute möglich, dass der Verkehrsinformationsdatenspeicher 11 eine Auswahl aus dieser Datenbasis trifft. Dadurch reduziert sich die zu übertragene Datenmenge an die Fahrzeugeinheit 3 im Fahrzeug. Welches Auswahlverfahren dabei Anwendung findet, ist für das Verfahren zur Fahrtroutenbestimmung selbst unerheblich.

Basierend auf diesem Datenmaterial wird der Fahrzeugeinheit 3 eine Antwort 22 von der Zentraleinheit 1 übermittelt. Die Zentraleinheit 1 liefert beispielsweise für die Reiseroute den aktuellen Straßen- und Verkehrszustand, insbesondere die benötigte Zeit zwischen jeweils zwei Referenzpunkten, Staumeldungen, zusätzliche Staumeldungen auf möglichen Alternativrouten. Für Letzteres kann beispielsweise die Kenntnis der im Fahrzeug verwendeten Kartenbasis verwendet werden.

Zudem liefert die Zentraleinheit 1 Referenzpunkte, an denen eine Aktualisierung der Routeninformation und/oder eine Übertragung der bislang aufgezeichneten Ist-Fahrzeiten stattfinden soll. Dies können beispielsweise bekannte Staustellen, nebelgefährdete Gebiete oder Streckenabschnitte sein, welche bei Regen oder Schnee nur mit stark reduzierter Geschwindigkeit befahrbar sind.

In der Fahrzeugeinheit 3 werden mit Hilfe dieser Informationen eine optimale Fahrtroute zum Ziel errechnet, die unter Umständen von ihrer Originalroute abweichen. Des Weiteren ist die aktuelle Reisezeit bestimmbar. Dieser Vorgang ist in der Figur 3 mit dem Bezugszeichen 23 und der Bezeichnung "Berechnung Route" gekennzeichnet.

Danach findet eine Zustandüberwachung 24 im Fahrzeug statt. So wird beispielsweise im Fahrzeug die aktuelle Fahrzeit zwischen zwei Referenzpunkten gespeichert, um beim nächsten Kontakt mit der Zentraleinheit übertragen zu werden. Parallel wird ständig die aktuelle Fahrzeit mit den von der Zentraleinheit gelieferten Fahrzeiten verglichen. Bei Abweichung kann, abhängig vom Grad der Abweichung, die Zentraleinheit automatisch über diese Abweichung informiert werden. Alternativ oder zusätzlich ist vorgesehen, dass der Fahrer über die Abweichung in Kenntnis gesetzt wird. Dabei ist auch vorgesehen, dass die Inkenntnissetzung der Zentraleinheit 1 von der Abweichung von dem Fahrer selbst ein- oder ausgeschaltet werden kann.

Aus dieser Zustandsüberwachung 24 des Fahrzeugs resultieren Entscheidungen, welche einerseits eine Kommunikation zwischen der Fahrzeugeinheit 3 und der Zentraleinheit 1 erforderlich machen oder auslösen können sowie Zustände, welche eine Kommunikation zwischen der Fahrzeugeinheit 3 und der Zentraleinheit 1 unterbrechen. Eine Auswahl aus dieser Zustandsüberwachung 24 resultierenden Entscheidungszustände sind in der Figur 3 als Symbole mit den Bezugszeichen 25 bis 29 sowie 31 und 32 gekennzeichnet. Im Folgenden werden solche Zustände, welche zu Entscheidungen hinsichtlich des weiteren Verfahrensablaufs führen, beschrieben.

Somit ist es zum einen möglich, zu überwachen, ob das Fahrtziel erreicht ist oder ob manuell ausgelöst oder beispielsweise aufgrund einer Störungsmeldung ein Abbruch des Verfahrens notwendig ist. Diese Abfrage ist in der Figur 3 mit dem Bezugszeichen 25 gekennzeichnet.

Wird diese Anfrage mit "ja" beantwortet, so wird das Verfahren an dieser Stelle abgebrochen. In der Figur 3 wird der Abbruch durch das Symbol "Ende", welches mit dem Bezugszeichen 26 versehen ist, gekennzeichnet.

Wird die Frage mit "nein" beantwortet, so erfolgt beispielsweise eine Anfrage, ob das FCD-Modul ein Stau bzw. eine gravierende Abweichung der tatsächlichen aktuellen Route von der berechneten (bestimmten) Route vorliegt. Diese Abfrage ist in der Figur 3 mit dem Bezugszeichen 27 gekennzeichnet.

Wird diese Anfrage mit "ja" beantwortet, so wird zunächst sichergestellt, dass der Stau nur einmal gemeldet wird. Symbolisch ist dies durch ein Rechteck mit dem Bezugszeichen 30 gekennzeichnet. Nach erfolgter Sicherstellung erfolgt im Beispiel die automatische Auslösung des Aktualisierungswunschs. Dies bedeutet konkret, dass Daten zur aktuellen Route, ggf. auch Historiendaten zu zurückliegenden Routen, von der Fahrzeugeinheit 3 zur Zentraleinheit 1 übertragen werden. Die automatische Auslösung des Aktualisierungswunschs ist in der Figur 3 mit dem Symbol mit dem Bezugszeichen 34 gekennzeichnet.

Daraufhin erfolgt wiederum eine Antwort der Zentraleinheit 35 entsprechend zu den obigen Ausführungen.

Wird demgegenüber vom FCD-Modul kein Stau oder eine gravierende Abweichung der aktuellen Route von der gewünschten Route festgestellt, so kann eine Überprüfung weiterer Ereignisse stattfinden. Im Beispiel gemäß der Figurn 3 wird zunächst überprüft, ob der Fahrer selbst einen Stau meldet. Diese Abfrage ist in der Figur 3 durch ein Symbol mit dem Bezugszeichen 28 gekennzeichnet. Ist dies der Fall, so folgt eine weitere Abfrage, ob der Stau in Fahrtrichtung oder in Gegenrichtung vorhanden ist. Die Abfrage nach einem Stau in Fahrtrichtung ist durch das Symbol mit dem Bezugszeichen 29 gekennzeichnet. Wird diese Abfrage mit "ja" beantwortet, so ist wie oben bei der Stauerkennung durch das FCD-Modul 5 sicherzustellen, dass der Stau nur einmal gemeldet wird (Symbol mit dem Bezugszeichen 30). Wiederum kann eine automatische Auslösung des Aktualisierungswunsches (34) und die entsprechende Antwort von der Zentraleinheit (35) erfolgen.

Befindet sich der Stau dagegen auf der Gegenfahrbahn, so ist eine automatische Auslösung des Aktualisierungswunsches nicht notwendig, da die momentane Fahrtroute nicht betroffen ist. Im Beispiel wird daher der Aktualisierungswunsch nur optional ausgelöst. Die optionale Auslösung des Aktualisierungswunsches ist in der Figur 3 durch das Symbol mit dem Bezugszeichen 33 gekennzeichnet. Bei einer entsprechenden Auslösung erfolgt dann wieder die entsprechende Antwort der Zentraleinheit (35) und eine Neuberechnung der Route (23). Die weitere Abfrageprozedur erfolgt analog der oberen Beschreibung.

Wird nun kein Stau gemeldet, so ist dem Fahrer freigestellt, ob er selbst eine Aktualisierung seiner Zielführung wünscht. Die Abfrage nach diesem Wunsch ist durch das Symbol mit dem Bezugszeichen 31 gekennzeichnet. Wird diese Anfrage mit ja beantwortet, so erfolgt wiederum die optionale Auslösung des Aktualisierungswunschs (33), die entsprechende Antwort der Zentraleinheit (35) und die Neuberechnung der Route (23).

Im Beispiel erfolgt nun eine Abfrage, ob ein Referenzpunkt zur Aktualisierung erreicht ist (Symbol mit dem Bezugszeichen 32). Eine Beantwortung mit ja führt wiederum zur optionalen Auslösung des Aktualisierungswunschs (33), der Antwort von der Zentraleinheit (35) und der Neuberechnung der Route (23). Ist ein entsprechender Referenzpunkt nicht erreicht, so erfolgt ein Durchlauf der gesamten Abfrageprozedur.

### Bezugszeichenliste

- 1: Zentraleinheit
- 3: Fahrzeug-Einheit
- 5: FCD-Modul
- 7: Navigationseinheit
- 9, 9': Kommunikationseinheit
- 10: Steuerungseinheit
- 11: Verkehrsinformationsdatenspeicher
- 13: Fahrtroutenbestimmungs-System
- 15: Übertragungsmanager
- 20: Start

- A: Routeninformationen
- B: Liste aller routenrelevanten Informationen
- C: Soll-Reisezeiten
- D: Konfigurationsdateien
- E: aktuelle Fahrt- und Ortungsinformationen
- F: FCD-Informationen
- G: aktuell detektierte Verkehrslage und Historienwerte

## Patentansprüche

1. Verfahren zur Bestimmung einer Fahrtroute eines Fahrzeugs zwischen einem momentanen Ort und einem Zielort, wobei
- im Fahrzeug (3) Daten zum momentanen Ort und zum Zielort als Daten (A) zur aktuellen Fahrtroute bestimmt werden,
- die Daten zur aktuellen Fahrtroute vom Fahrzeug (3) zu einem zentralen Verkehrsinformationsdatenspeicher (11) übertragen werden.
- Verkehrsinformationsdaten zu einem Verkehrsnetz im Bereich der aktuellen Fahrtroute von dem zentralen Verkehrsinformationsdatenspeicher (11) an das Fahrzeug geliefert werden,
- die gelieferten Verkehrsinformationsdaten im Fahrzeug (3) zu einer Bestimmung der Fahrtroute in dem Verkehrsnetz zwischen dem momentanen Ort und dem Zielort verwendet werden und
- Daten der bestimmten Fahrtroute und Daten zur aktuellen Fahrtroute dem Fahrzeugführer zur Verfügung gestellt werden, wobei die Daten der aktuellen Fahrtroute vom zentralen Verkehrsinformationsdatenspeicher (11) wenigstens teilweise in seinen Datenbestand aufgenommen werden.

2. Verfahren nach Anspruch 1,
**dadurch gekennzeichnet, dass** als Antwort auf die Übertragung von Daten Verkehrsinformationsdaten (A) zur aktuellen Fahrtroute vom zentralen Verkehrsinformationsdatenspeicher (11) zum Fahrzeug (3) geliefert werden.

3. Verfahren nach Anspruch 1 oder 2,
**dadurch gekennzeichnet , dass** zusätzlich Daten zu bisherigen Fahrtverläufen zu dem zentralen Verkehrsinformationsdatenspeicher (11) übertragen werden.

4. Verfahren nach einem der vorangegangenen Ansprüche,
**dadurch gekennzeichnet , dass** Zusatzinformationsdaten (G) zu dem zentralen Verkehrsinformationsdatenspeicher (11) übertragen werden.

5. Verfahren nach einem der vorangegangenen Ansprüche,
**dadurch gekennzeichnet , dass** die Daten (A) zur aktuellen Fahrtroute und die Daten zur bestimmten Fahrroute verglichen werden und bei Abweichung der Daten dieses dem Fahrer angezeigt wird.

6. Verfahren nach einem der vorangegangenen Ansprüche,
**dadurch gekennzeichnet, dass** die Übertragung der Daten zu dem Verkehrsinformationsdatenspeicher (11) manuell ausgelöst erfolgt.

7. Verfahren nach einem der vorgegangenen Ansprüche,
**dadurch gekennzeichnet , dass** die Übertragung der Daten zu dem Verkehrinformationsdatenspeicher (11) automatisch ausgelöst erfolgt.

8. Verfahren nach einem der vorangegangenen Ansprüche,
**dadurch gekennzeichnet , dass** ein Übertragungsmanager (15) nach einer Anfrage an den Verkehrsinformationsspeicher (11) eine begrenzte Anzahl weiterer Anfragen automatisch auslösen kann bzw. zulässt.

9. Verfahren nach Anspruch 7 oder 8,
**dadurch gekennzeichnet , dass** die Übertragung der Daten zu dem Verkehrsinformationsdatenspeicher (11) zyklisch erfolgt.

10. Verfahren nach Anspruch 7, 8 oder 9,
**dadurch gekennzeichnet , dass** die Übertragung der Daten zu dem Verkehrsinformationsdatenspeicher (11) an fest vorgegebenen Ortspunkten erfolgt.

11. Verfahren nach einem der Ansprüche 7 bis 10,
**dadurch gekennzeichnet , dass**
- die Daten (A) zur aktuellen Fahrtroute und die Daten zur bestimmten Fahrtroute verglichen werden und dass
- bei einer Abweichung der aktuellen Fahrtroute von der bestimmten Fahrtroute die Übertragung der Daten (A) zu dem Verkehrsinformationsdatenspeicher (11) erfolgt.

12. Verfahren nach einem der vorangegangenen Ansprüche,
**dadurch gekennzeichnet , dass** die Bestimmung der Fahrtroute im Fahrzeug (3) erfolgt.

13. Verfahren nach einem der vorangegangenen Ansprüche,
**dadurch gekennzeichnet, dass** die Bestimmung der Fahrtroute am Ort des zentralen Verkehrsinformationsdatenspeichers (11) erfolgt.

14. Verfahren nach einem der vorangegangenen Ansprüche,
**dadurch gekennzeichnet , dass** die Übertragung der Daten über das WAP-, HTTP-, TCP/IP-Protokoll oder ähnliches Protokoll erfolgt.

15. Verfahren nach einem der vorangegangenen Ansprüche,
**dadurch gekennzeichnet , dass** das GSM-, GPRS-, UMTS- oder ähnliches Übertragungsverfahren zur Anwendung kommt.

16. Verfahren nach einem der vorangegangenen Ansprüche,
**dadurch gekennzeichnet , dass** höherwertige Telematikdienste mit einbezogen werden.

17. System zur Durchführung des Verfahrens nach einem der vorangegangenen Ansprüche,
- mit einer Zentraleinheit (1), umfassend einen zentralen Verkehrsinformationsdatenspeicher (11) einer Steuereinheit (10) und eine Kommunikationseinrichtung (9') zum Empfangen und Senden von Daten von und zu einer Fahrzeugeinheit (13), um fassend eine Kommunikationseinrichtung zum Empfangen und Senden von Daten von und zu der Zentraleinheit (1), eine Einheit (5) zur Erfassung von Verkehrszuständen, eine Navigationseinheit (7) und einen Übertragungsmanager (15) zum Steuern des Empfangs und des Sendens der Daten (A, B, C, D, E, F, G) .

18. Navigationsgerät in einem Fahrzeug mit Bedienungselementen zum Eingeben von Navigationsdaten in einen Navigationsrechner,
**dadurch gekennzeichnet , dass** zumindest eines der Bedienungselemente bei Betätigung die in einem der vorgenannten Ansprüche erwähnte Datenübertragung der aktuellen Fahrtroute vom Fahrzeug (3) zum zentralen Verkehrsinformationsdatenspeicher (11) auslöst.

## Claims

1. Method for determination of a driving route of a vehicle between a present location and a destination, in which
- data on the instantaneous location and destination are determined in the vehicle (3) as data (A) on the actual driving route,
- the data on the actual driving route are transmitted from vehicle (3) to a central traffic information memory (11),
- traffic information concerning a traffic network in the area of the current driving route is furnished to the vehicle from the central traffic information memory (11),
- the furnished traffic information data is used in the vehicle (3) for determination of the driving route in the traffic network between the instantaneous location and the destination, and
- data of the determined driving route and data on the actual driving route are made available to the vehicle driver, in which the data of the actual driving route are recorded by the central traffic information memory (11), at least partially, in its data inventory.

2. Method according to Claim 1,
**characterised in that** traffic information data (A) concerning the actual driving route are furnished to vehicle (3) from the central traffic information memory (11) as response to the transmission of data.

3. Method according to Claim 1 or 2,
**characterised in that** data about the previous driving routes are additionally transmitted to the central traffic information memory (11).

4. Method according to one of the preceding claims,
**characterised in that** additional information data (G) are transmitted to the central traffic information memory (11).

5. Method according to one of the preceding claims,
**characterised in that** the data (A) concerning the actual driving route and the data concerning the determined driving route are compared and, in the case of a deviation, this is indicated to the driver.

6. Method according to one of the preceding claims,
**characterised in that** transmission of the data to the traffic information memory (11) is triggered manually.

7. Method according to one of the preceding claims,
**characterised by** the fact that transmission of the data to the traffic information memory (11) is triggered automatically.

8. Method according to one of the preceding claims,
**characterised in that** a transmission manager (15) can automatically trigger or permits a limited number of additional queries after a query to the traffic information memory (11).

9. Method according to Claim 7 or 8,
**characterised in that** transmission of data occurs at a regular period to the traffic information memory (11).

10. Method according to Claim 7, 8 or 9,
**characterised in that** transmission of data to the traffic information memory (11) occurs at stipulated locations.

11. Method according to one of the Claims 7 to 10,
**characterised in that**
- the data (A) concerning the actual driving route and the data concerning the determined driving route are compared, and that
- in the case of a deviation of the actual driving route from the determined driving route, transmission of data (A) to the traffic information memory (11) occurs.

12. Method according to one of the preceding claims,
**characterised in that** determination of the driving route occurs in vehicle (3).

13. Method according to one of the preceding claims,
**characterised in that** determination of the driving route occurs at the location of the traffic information memory (11).

14. Method according to one of the preceding claims,
**characterised in that** transmission of the data occurs via the WAP, HTTP, TCP/IP protocol, or a similar protocol.

15. Method according to one of the preceding claims,
**characterised in that** the GSM, GPRS, UMTS or similar transmission method is used.

16. Method according to one of the preceding claims,
**characterised in that** higher valued telematics services are involved.

17. System for performance of the method according to one of the preceding claims,
- with a central unit (1), comprising a traffic information memory (11), a control unit (10) and a communication device (9') to receive and transmit data from and to a vehicle unit (13), comprising a communication device to receive and transmit data from and to the central unit (1), a unit (5) to record traffic states, a navigation unit (7) and a transmission manager (15) to control reception and transmission of data (A, B, C, D, E, F, G).

18. Navigation device of a vehicle with operating elements to enter navigational data in a navigation computer, **characterised in that** at least one of the operating elements during operation triggers the data transmission of the actual driving route from the vehicle (3) to the central traffic information memory (11) mentioned in one of the preceding claims.

## Revendications

1. Procédé de détermination du trajet d'un véhicule entre un lieu momentané et un lieu de destination,
- des données concernant le lieu momentané et le lieu de destination étant déterminées dans le véhicule (3) en tant que données (A) concernant le trajet actuel,
- les données concernant le trajet actuel du véhicule (3) étant transmises à une mémoire centrale de données concernant les informations de trafic (11),
- des données concernant des informations de trafic d'un réseau routier dans la région du trajet actuel étant fournies au véhicule à partir de la mémoire centrale de données concernant les informations de trafic (11),
- les données fournies concernant les informations de trafic étant utilisées dans le véhicule (3) pour une détermination du trajet sur le réseau routier, entre le lieu momentané et le lieu de destination, et
- des données concernant le trajet déterminé et des données concernant le trajet actuel étant mises à disposition du conducteur du véhicule, les données concernant le trajet actuel étant au moins reprises partiellement dans son fichier de données par la mémoire centrale de données concernant les informations de trafic (11).

2. Procédé selon la revendication 1,
**caractérisé en ce que**, en réponse à la transmission de données, des données concernant les informations de trafic (A) au sujet du trajet actuel sont fournies au véhicule (3) par la mémoire centrale de données concernant les informations de trafic (11).

3. Procédé selon la revendication 1 ou 2,
**caractérisé en ce qu'**en outre, des données concernant le déroulement des anciens trajets sont transmises à la mémoire centrale de données concernant les informations de trafic (11).

4. Procédé selon l'une quelconque des revendications précédentes, **caractérisé en ce que** des données d'informations supplémentaires (G) sont transmises à la mémoire centrale de données concernant les informations de trafic (11).

5. Procédé selon l'une quelconque des revendications précédentes, **caractérisé en ce que** les données (A) concernant le trajet actuel et les données concernant le trajet déterminé sont comparées et en cas d'écart entre les données, cet état est signalé au conducteur.

6. Procédé selon l'une quelconque des revendications précédentes, **caractérisé en ce que** la transmission des données à la mémoire centrale de données concernant les informations de trafic (11) est déclenchée de façon manuelle.

7. Procédé selon l'une quelconque des revendications précédentes, **caractérisé en ce que** la transmission des données à la mémoire centrale de données concernant les informations de trafic (11) est déclenchée de façon automatique.

8. Procédé selon l'une quelconque des revendications précédentes, **caractérisé en ce que** après avoir interrogé la mémoire d'informations de trafic (11), un gestionnaire de transmission (15) peut déclencher automatiquement ou autoriser un nombre limité d'interrogations supplémentaires.

9. Procédé selon la revendication 7 ou 8, **caractérisé en ce que** la transmission des données à la mémoire de données concernant les informations de trafic (11) est assurée de façon cyclique.

10. Procédé selon la revendication 7, 8 ou 9, **caractérisé en ce que** la transmission des données à la mémoire de données concernant les informations de trafic (11) est assurée à des points de localité fixement prédéfinis.

11. Procédé selon l'une quelconque des revendications 7 à 10, **caractérisé en ce que**
- les données (A) concernant le trajet actuel et les données concernant le trajet déterminé sont comparées et **en ce que**
- dans le cas d'un écart entre le trajet actuel et le trajet déterminé, la transmission des données (A) vers la mémoire de données concernant les informations de trafic (11) est effectuée.

12. Procédé selon l'une quelconque des revendications précédentes, **caractérisé en ce que** la détermination du trajet est assurée dans le véhicule (3).

13. Procédé selon l'une quelconque des revendications précédentes, **caractérisé en ce que** la détermination du trajet est assurée au lieu de la mémoire centrale de données concernant les informations de trafic (11).

14. Procédé selon l'une quelconque des revendications précédentes, **caractérisé en ce que** la transmission des données est assurée par le protocole WAP, http, TCP/IP ou par un protocole analogue.

15. Procédé selon l'une quelconque des revendications précédentes, **caractérisé en ce qu'**on utilise le procédé de transmission GSM, GPRS, UMTS ou analogue.

16. Procédé selon l'une quelconque des revendications précédentes, **caractérisé en ce que** des services télématiques plus évolués sont impliqués.

17. Système pour mettre en oeuvre le procédé selon l'une quelconque des revendications précédentes,
- avec une unité centrale (1) comprenant une mémoire centrale de données concernant les informations de trafic (11) d'une unité de commande (10) et un dispositif de communication (9') pour réceptionner et émettre des données à partir de et vers une unité de véhicule (13), comprenant un dispositif de communication pour réceptionner et émettre des données à partir de et vers l'unité centrale (1), une unité (5) pour enregistrer des états de trafic, une unité de navigation (7) et un gestionnaire de transmission (15) pour piloter la réception et l'émission des données (A, B, C, D, E, F, G).

18. Navigateur dans un véhicule avec des éléments de commande pour saisir des données de navigation dans un ordinateur de navigation, **caractérisé en ce que** lors de son actionnement, au moins l'un des éléments de commande déclenche la transmission de données concernant le trajet actuel évoquée dans l'une des revendications précédentes du véhicule (3) vers la mémoire centrale de données concernant les informations de trafic (11).
